# EUROPÄISCHE PATENTSCHRIFT

(11) **EP 3 599 411 B1**
(45) Veröffentlichungstag und Bekanntmachung des Hinweises auf die Patenterteilung: **16.11.2022**
(21) Anmeldenummer: 18186017.2
(22) Anmeldetag: 27.07.2018
(51) Int. Cl.: F16P 3/14

(54) **EINRICHTUNG UND VERFAHREN ZUM ERZEUGEN UND ÜBERWACHEN EINES SICHERHEITSBEREICHES IN EINEM ARBEITSRAUM**
DEVICE AND METHOD FOR PRODUCING AND MONITORING A SAFETY AREA IN A WORK SPACE
DISPOSITIF ET PROCÉDÉ DE GÉNÉRATION ET DE SURVEILLANCE D'UNE ZONE DE SÉCURITÉ DANS UNE CHAMBRE DE TRAVAIL

(43) Veröffentlichungstag der Anmeldung: 29.01.2020
(73) Patentinhaber: Fraunhofer-Gesellschaft zur Förderung der angewandten Forschung e.V., 80686 München (DE)
(72) Erfinder: ELKMANN, Dr. Norbert, 39104 Magdeburg (DE); WALTER, Christoph, 39106 Magdeburg (DE); VOGEL, Christian, 09112 Chemnitz (DE)
(74) Vertreter: Pfenning, Meinig & Partner mbB

(56) Entgegenhaltungen:
- EP-A2- 1 164 556
- DE-B3-102016 101 793

## Beschreibung

Die vorliegende Anmeldung liegt auf dem Gebiet des Fabrikbetriebs und der Fabrikautomatisierung. Die Anmeldung betrifft eine Einrichtung zum Erzeugen und Überwachen eines Sicherheitsbereichs in einem Arbeitsraum. Außerdem betrifft die vorliegende Anmeldung ein Verfahren zum Erzeugen und Überwachen des Sicherheitsbereichs.

Zur Absicherung einer gefahrbringenden Maschine oder eines Gefahrbringenden Roboters für die Gewährleistung der Sicherheit eines in einem Arbeitsraum arbeitenden Menschen können projektions- und kamerabasierte Sensorsysteme zum Einsatz kommen, die Sicherheitsbereiche - beispielsweise in Form von Linien oder Punkten - in den Arbeitsraum projizieren und hinsichtlich einer Unterbrechung mit Kameras überwachen. Auf diese Weise können Verletzungen der Sicherheitsbereiche detektiert werden.

Für die Überwachung der Sicherheitsbereiche durch die Kameras ist eine Extraktion der Projektionsstrahlen in von den Kameras aufgenommenen Bildern notwendig. Beispielsweise beschreibt die Druckschrift EP 2 558 886 B1 eine Einrichtung zur Überwachung mindestens eines dreidimensionalen Sicherheitsbereichs, insbesondere eines Raums in gemeinsamen Arbeitsbereichen von Menschen und Maschinen. Hierbei werden auf einen Boden eines Überwachungsbereichs den Sicherheitsbereich definierende Markierungen als moduliertes Licht mit vorgegebener Frequenz projiziert. Die Modulation kann hierbei beispielsweise auf der Grundlage von Helligkeits- und/oder Farbänderungen durchgeführt werden. Die Modulation führt dazu, dass die den Sicherheitsbereich definierenden Linien abwechselnd projiziert und nicht projiziert werden. Eine Aufnahme von Kamerabildern durch eine Aufnahmevorrichtung ist hierbei auf die vorgegebene Frequenz der Modulation synchronisiert. Zur Auswertung und Feststellung, ob eine Person oder ein Objekt in den Sicherheitsbereich eindringt, werden zwei aufeinanderfolgende Kamerabilder, die einer Projektion- und einer Nichtprojektion des Sicherheitsbereichs entsprechen, herangezogen. Aus den beiden Kamerabildern wird ein Differenzbild erzeugt, das anschließend hinsichtlich einer Verletzung des Sicherheitsbereiches ausgewertet wird. Die Druckschrift DE 10 2016 101 793 B3 beschreibt eine optoelektronische Vorrichtung zur Absicherung einer Gefahrenquelle in einem Raumbereich. Die Vorrichtung umfasst einen Bildsensor, welcher im infraroten Spektrum arbeitet und welcher entfernungsaufgelöste Daten des Raumbereichs erzeugen kann, sowie eine Steuer- und Auswertungseinheit. Die Steuer- und Auswertungseinheit berechnet mit Hilfe einer stereoskopischen Disparitätsschätzung dreidimensionale Bilddaten des Raumbereichs. Die Auswertungseinheit wertet diese Bilddaten aus, um unzulässige Objekteingriffe in einen Schutzraum zu erkennen.

Vor dem Hintergrund des vorbekannten Standes der Technik ist es eine Aufgabe der vorliegenden Anmeldung, eine verbesserte Einrichtung zum Erzeugen und Überwachen eines Sicherheitsbereichs in einem Arbeitsraum vorzuschlagen. Insbesondere ist es eine Aufgabe, eine Einrichtung vorzuschlagen, die eine besonders zuverlässige Detektion eines Sicherheitsbereiches erlaubt und dabei vergleichsweise wenig aufwendig gestaltet ist. Es ist außerdem eine Aufgabe der vorliegenden Anmeldung, ein entsprechend vorteilhaftes Verfahren zum Erzeugen und Überwachen eines Sicherheitsbereichs in einem Arbeitsraum vorzuschlagen.

Gelöst werden diese Aufgaben durch eine Einrichtung nach Anspruch 1 sowie durch ein Verfahren gemäß einem weiteren Anspruch. Vorteilhafte Weiterbildungen ergeben sich mit den Merkmalen der abhängigen Ansprüche und der Ausführungsbeispiele.

Die vorgeschlagene Einrichtung zum Erzeugen und Überwachen eines Sicherheitsbereiches in einem Arbeitsraum umfasst eine Aufnahmevorrichtung. Die Aufnahmevorrichtung ist eingerichtet, Abbilder in einem den Sicherheitsbereich umfassenden Überwachungsbereich aufzunehmen. Weiterhin umfasst die Einrichtung eine Beleuchtungsvorrichtung, die beispielsweise ein Projektor sein kann. Die Beleuchtungsvorrichtung ist eingerichtet, den Sicherheitsbereich definierende Linien oder Muster in den Arbeitsraum zu projizieren. Außerdem umfasst die Einrichtung eine Auswertevorrichtung, die eingerichtet ist, die von der Aufnahmevorrichtung aufgenommenen Abbilder hinsichtlich einer Verletzung des Sicherheitsbereiches auszuwerten. Vom bekannten Stand der Technik unterscheidet sich die Einrichtung zumindest dadurch, dass die Beleuchtungsvorrichtung eingerichtet ist, eine zeitlich codierte Abfolge der Linien oder Muster in den Arbeitsraum zu projizieren, insbesondere wiederholt eine zeitlich codierte Abfolge der Linien oder Muster in den Arbeitsraum zu projizieren. Außerdem ist die Auswertevorrichtung eingerichtet, Abbilder der zeitlich codierten Abfolge der Linien oder Muster mit einer zu erwartenden Abfolge zu vergleichen und ein Verletzungssignal auszugeben, wenn die Abbilder der zeitlich codierten Abfolge nicht mit der zu erwartenden Abfolge übereinstimmen. Insbesondere kann die Auswertevorrichtung eingerichtet sein, Abbilder der zeitlich codierten Abfolge der Linien oder Muster wiederholt mit der zu erwartenden Abfolge zu vergleichen und ein Verletzungssignal auszugeben, wenn die Abbilder der zeitlich codierten Abfolge nicht mit der zu erwartenden Abfolge übereinstimmen.

Unter einer zeitlich codierten Abfolge im Sinne dieser Anmeldung ist eine Abfolge zu verstehen, die über ein abwechselndes Projizieren gleichlanger unterschiedlicher Lichtsignale, wie beispielswiese ein einfaches An/aus oder eine einfache Intensitäts- oder Farbänderung, an einem Ort in zeitlicher und/oder räumlicher Hinsicht hinausgeht. Beispielsweise kann diese zeitlich codierte Abfolge durch eine räumliche Modulation der projizierten Linien bzw. Muster und/oder durch eine Abfolge mit mehr als zwei aufeinanderfolgenden Projektionszuständen gegeben sein, wie unten genauer beschrieben ist. Die zeitlich codierte Abfolge kann auch dadurch definiert sein, dass die Aufnahmevorrichtung mehr als zwei aufeinanderfolgende Abbilder zur Detektion einer Verletzung des Sicherheitsbereichs auswertet. Somit handelt es sich bei der zeitlich codierten Abfolge nicht um ein eine einfache Projektion mit feststehender Frequenz mit einer Auswertung von lediglich zwei aufeinander folgenden Abbildern. Unter einem projizierten Muster kann beispielsweise auch eine flächige Ausleuchtung, eine Ansammlung von projizierten Punkten oder ein einzelner projizierter Punkt zu verstehen sein. In einigen Ausführungen kann das Muster auch eine Vielzahl von Rechtecken als strukturierende Elemente aufweisen.

Indem eine Verletzung des Sicherheitsbereiches durch die vorgeschlagene Einrichtung detektiert wird und indem im Falle einer Verletzung ein Verletzungssignal ausgegeben wird, können beispielsweise Kollisionen zwischen Maschinen und Menschen vermieden werden, so dass die Arbeitssicherheit in dem Arbeitsraum erhöht wird.

Für jede Detektion bzw. Nichtdetektion einer Verletzung des Sicherheitsraums werden in der Regel Abbilder zumindest einer, insbesondere genau einer, Abfolge ausgewertet. Die zeitlich codierte Abfolge kann hierbei wiederholt in den Arbeitsraum projiziert und ausgewertet werden, um mögliche Verletzungen des Sicherheitsbereiches zu späteren Zeitpunkten zu detektieren. Eine Verletzung kann beispielsweise durch das Eindringen eines Objektes, einer Maschine oder eines Menschen in den Sicherheitsbereich hervorgerufen werden.

Dadurch, dass eine zeitlich codierte Abfolge der Linien bzw. Muster projiziert wird, deren Abbilder ausgewertet werden, wird eine eindeutige und robuste, d.h. zuverlässige, Extraktion der Projektionsstrahlen in den Abbildern erreicht. Die vorgeschlagene Einrichtung erlaubt die zuverlässige Extraktion insbesondere bei plötzlichen Störeinflüssen aus der Umgebung, wie beispielsweise bei Änderungen des Umgebungslichts, insbesondere bei Blitzlicht. Beispielsweise kann bei bekannten Einrichtungen Blitzlicht das Licht der Beleuchtungsvorrichtung überdecken, falls es gleichzeitig mit diesem auftritt. Somit kann es bei bekannten Einrichtungen mit erhöhter Wahrscheinlichkeit vorkommen, dass fälschlicherweise eine Verletzung des Sicherheitsbereichs nicht detektiert wird, obwohl ein Objekt oder Mensch in den Sicherheitsbereich eingedrungen ist. Vorliegend kann diese Gefahr durch die Verwendung der zeitlich codierten Abfolge verringert werden.

Dadurch, dass mehrere Projektionsbilder in der zeitlichen Abfolge projiziert und wieder aufgenommen werden, können Störeinflüsse (z.B. Blitzlicht), welche die Funktionsfähigkeit und/oder Leistungsfähigkeit des Überwachungssystems prinzipiell beeinträchtigen oder auch verhindern können, vom System aufgedeckt werden. Das System kann dann ein Signal (Verletzungssignal) ausgeben, welches auf diese für das Überwachungssystem ungünstigen Umgebungsbedingungen hinweist. Wichtig ist dabei, dass das Überwachungssystem eben kein falsches Signal generiert und sich somit weiterhin in einem sicheren Zustand befindet. Beispielsweise könnte das System bei einer Abfolge von fünf Projektionsbildern beim dritten Abbild eine Störung genau dann detektieren, wenn zum Zeitpunkt des dritten Abbildes ein Blitzlicht auftritt und dazu führt, dass anstatt des Zustandes (Aus) der Zustand (An) detektiert wird. Da die anderen Zustände der Abbilder den erwarteten Zuständen entsprechen, kann hier von einem Störeinfluss ausgegangen werden. Der Unterschied zu einer "echten" Verletzung des Sicherheitsbereiches durch ein Objekt, Mensch oder Maschine ist der, dass diese Verletzung in mehreren (mindestens zwei) aufeinanderfolgenden Abbildern detektiert werden würde. Dazu müssen die Abbilder mit entsprechend hoher Framerate aufgenommen werden.

Entsprechend vorteilhaft ist das vorgeschlagene Verfahren zum Erzeugen und Überwachen eines Sicherheitsbereiches in einem Arbeitsraum. Hierbei wird zunächst die wie oben oder unten beschrieben ausgebildete Einrichtung bereitgestellt. Anschließend wird durch die Beleuchtungsvorrichtung wiederholt die zeitlich codierte Abfolge der den Sicherheitsbereich definierenden Linien oder Muster in den Arbeitsraum projiziert. In einem weiteren Schritt werden die Abbilder der zeitlich codierten Abfolge der Linien bzw. Muster durch die Aufnahmevorrichtung aufgenommen. Außerdem werden durch die Auswertevorrichtung die Abbilder der zeitlich codierten Abfolge der Linien oder Muster wiederholt mit einer zu erwartenden Abfolge verglichen. Außerdem wird ein Verletzungssignal durch die Auswertevorrichtung ausgegeben, wenn die Abbilder der zeitlich codierten Abfolge nicht mit der zu erwartenden Abfolge übereinstimmen.

Es ist in der Regel vorgesehen, dass die zeitlich codierte Abfolge projizierter Linien und Muster zumindest zwei aufeinanderfolgende Projektionszustände umfasst, sodass zur Bestimmung der Verletzung des Sicherheitsbereiches zumindest zwei Abbilder ausgewertet werden. Besonders vorteilhaft kann es sein, wenn die zeitlich codierte Abfolge projizierter Linien und Muster zumindest drei aufeinanderfolgende Projektionszustände umfasst. In diesem Fall werden zur Bestimmung der Verletzung des Sicherheitsbereiches zumindest drei Abbilder ausgewertet. In der Regel wird dieselbe Anzahl aufeinanderfolgender Projektionszustände in der Abfolge projiziert wie durch die Auswertevorrichtung zur Bestimmung einer einzelnen Verletzung zu einem Zeitpunkt ausgewertet wird.

Die aufeinanderfolgenden Projektionszustände der Abfolge müssen nicht notwendigerweise sämtlich paarweise unterschiedlich sein. Zumindest zwei der Projektionszustände der Abfolge sind jedoch in der Regel unterschiedlich. Es kann auch vorgesehen sein, dass die zeitlich codierte Abfolge aus zwei unterschiedlichen Projektionszuständen besteht. Unterschiedliche Projektionszustände der Abfolge können An (Muster bzw. Linien werden projiziert) und Aus (kein Licht wird projiziert) sein. Hierdurch kann in der Regel ein guter Kontrast zwischen den Projektionszuständen erreicht werden, wodurch die Auswertung durch die Auswertevorrichtung vereinfacht werden kann. Eine beispielhafte Abfolge von Projektionen wäre in diesem Fall Aus/an/an/aus/an, bei der die genau zwei unterschiedlichen Projektionszustände Aus und An verwendet werden.

Es kann in einigen Ausführungen vorgesehen sein, dass die räumliche Verteilung des projizierten Lichtes in allen vorgesehenen Projektionszuständen der Abfolge, in denen Licht projiziert wird, dieselbe ist. Hierdurch kann ein vergleichsweise einfacher Aufbau einer Projektionsoptik der Beleuchtungsvorrichtung ausreichen. Eine Codierung der Abfolge kann beispielsweise durch eine Modulation der Intensität oder der Wellenlänge, insbesondere Farbe, erfolgen. Zusätzlich oder alternativ kann es sinnvoll und vorgesehen sein, dass die zeitlich codierte Abfolge der projizierten Linien bzw. Muster auch eine räumliche Modulation der projizierten Linien bzw. Muster umfasst. In diesem Fall weisen zumindest zwei der aufeinanderfolgenden Projektionszustände der Abfolge eine unterschiedliche räumliche Verteilung von projiziertem Licht auf. In der Regel wird die Beleuchtungsvorrichtung durch einen Computer oder durch die unten beschriebene Steuereinheit angesteuert, so dass die Beleuchtungsvorrichtung die entsprechenden Abfolgen in den Arbeitsraum projiziert. Auf dem Computer bzw. der Steuereinheit werden entsprechende Ansteuerungsprogramme ausgeführt. Die Beleuchtungsvorrichtung kann aber in anderen Ausführungen beispielsweise eine zeitlich modulierte Blendenoptik umfassen, die die Projektion der entsprechenden Abfolgen hervorruft. Beispielsweise kann die Beleuchtungsvorrichtung ein Projektor sein. Es kann aber auch vorgesehen sein, dass die Beleuchtungsvorrichtung eine LED-Matrix, ein LED-Array oder eine segmentierte LED-Anzeige ist. Die Beleuchtungsvorrichtung kann zur Projektion der Abfolge von Linien bzw. Mustern eine entsprechend geeignete Optik, beispielsweise MEMS-Spiegelelemente umfassend, aufweisen.

Wenn die zeitlich codierte Abfolge der projizierten Linien bzw. Muster die räumliche Modulation umfasst, kann es besonders vorteilhaft sein, wenn die Abfolge lediglich zwei unterschiedliche Projektionszustände umfasst. In diesem Fall werden in der Regel lediglich zwei Abbilder zur Detektion bzw. Nichtdetektion der Verletzung des Sicherheitsbereichs benötigt. In einer solchen Ausführung kann die Auswertung hinsichtlich der Verletzung sehr schnell erfolgen. Dadurch können beispielsweise vorgeschriebene Sicherheitsabstände zwischen Menschen und gefahrbringenden Maschinen vorteilhaft verringert werden.

Ein von der Beleuchtungsvorrichtung projiziertes Muster bzw. eine projizierte Linie kann beispielsweise einer Umrandung des Sicherheitsbereichs entsprechen. Zum Beispiel kann die Beleuchtungsvorrichtung eingerichtet sein, eine Begrenzungslinie des Sicherheitsbereiches in den Arbeitsraum zu projizieren. In diesem Fall definiert die Begrenzungslinie in der Regel den Sicherheitsbereich. Es kann bei einer räumlichen Modulation der Projektionszustände der Abfolge vorgesehen sein, dass die zeitlich codierte Abfolge der projizierten Linien bzw. Muster eine aufeinanderfolgende Ausleuchtung unterschiedlicher Abschnitte einer Begrenzungslinie des Sicherheitsbereiches umfasst. Typischerweise bildet die Begrenzungslinie des Sicherheitsbereiches eine geschlossene Linie. Die Abfolge der projizierten Linien bzw. Muster kann eine abschnittsweise aufeinanderfolgende Beleuchtung der gesamten Begrenzungslinie umfassen. Beispielsweise kann die Begrenzungslinie durch die Abfolge der Projektionszustände abschnittsweise umlaufend ausgeleuchtet werden. Es kann hierbei vorgesehen sein, dass die Begrenzungslinie innerhalb der Abfolge vollständig ausgeleuchtet wird. Das projizierte Licht kann die Begrenzungslinie in der Abfolge beispielsweise einmal oder mehrfach umlaufen.

In besonders bevorzugten Ausführungen kann die zeitlich codierte Abfolge der projizierten Linien bzw. Muster aus Projektionszuständen bestehen, die einer unterbrochenen Begrenzungslinie entsprechen. Beispielsweise kann die unterbrochene Begrenzungslinie eine Form einer Strichlinie aufweisen, die aus beleuchteten und unbeleuchteten Abschnitten besteht. Insbesondere kann jeder der Projektionszustände einer unterbrochenen Begrenzungsline entsprechen. In einer bevorzugten Ausführung ist es außerdem vorgesehen, dass die zeitlich codierte Abfolge der projizierten Linien bzw. Muster eine abwechselnde Ausleuchtung unterschiedlicher Abschnitte der Begrenzungslinie umfasst. In diesem Fall kann die Abfolge genau zwei Projektionszustände umfassen. Diese Ausführung erlaubt eine besonders schnelle und zuverlässige Erkennung der Verletzung des Sicherheitsbereiches. Es kann vorgesehen sein, dass die Abschnitte hinreichend klein gewählt werden, so dass eine Verletzung des Sicherheitsbereiches durch ein Objekt mit großer Wahrscheinlichkeit eine Abdeckung von zwei benachbarten der abwechselnd ausgeleuchteten Abschnitte zur Folge hat. Auf diese Weise kann eine Verletzung des Sicherheitsbereiches auch dann zuverlässig detektiert werden, wenn beispielsweise einer der Projektionszustände durch ein zeitgleiches Störsignal, beispielsweise ein Blitzlicht, überdeckt ist. Zumindest einige der Abschnitte können daher in einigen möglichen Ausführungen vergleichsweise kurz sein und eine Länge von maximal 50 cm, vorzugsweise maximal 20 cm und besonders vorzugsweise maximal 5 cm, beispielsweise 1 cm, aufweisen.

Die Projektionszustände können vorteilhafterweise so ausgebildet sein, dass die Begrenzungslinie bei einer gedachten Überlagerung der Projektionszustände durchgängig und geschlossen ist, so dass ein Eindringen in den Sicherheitsbereich an jeder Stelle der Begrenzungslinie zuverlässig detektiert werden kann.

In einigen Ausführungen ist die Auswertevorrichtung eingerichtet, Differenzbilder aus zumindest zweien der Abbilder der zeitlich codierten Abfolge zu bilden. Weiterhin kann die Auswertevorrichtung eingerichtet sein, die Differenzbilder mit der zu erwartenden Abfolge zu vergleichen. Durch die Differenzbildung kann auf einfache Weise eine Unterdrückung von Störeinflüssen erfolgen, bei der lediglich oder zumindest vornehmlich die Änderungen der aufeinanderfolgenden Projektionszustände in der Abfolge die Abbilder bestimmen. Störeinflüsse im Überwachungsbereich, die sich nicht auf derselben Zeitskala ändern wie die Projektionszustände, beeinflussen die Abbilder nicht oder nur in geringem Maße.

Eine einzelne Abfolge entspricht in der Regel immer nur einem ortsfesten Sicherheitsbereich. Dieser muss aber nicht statisch sein, sondern kann zeitlich veränderlich, d.h. dynamisch, sein. Beispielsweise kann sich der Sicherheitsbereich ändern, wenn sich eine Arbeitssituation im Arbeitsraum ändert. Insbesondere kann sich der Sicherheitsbereich in Abhängigkeit des Zustandes einer Maschine oder eines Roboters dynamisch in Größe, Form und Position anpassen. Hierdurch können minimale Sicherheitsbereiche generiert und überwacht werden und ein maximaler Bereich für Menschen zur Verfügung gestellt werden. Die Einrichtung kann beispielsweise eine mit der Beleuchtungsvorrichtung verbundene Steuereinheit aufweisen. Die Steuereinheit ist typischerweise mit der Aufnahmevorrichtung und/oder mit der Beleuchtungsvorrichtung verbunden. Die Steuereinheit kann eingerichtet sein, die Beleuchtungsvorrichtung zur Anpassung des Sicherheitsbereichs an veränderte Arbeitssituationen derart anzusteuern, dass die Beleuchtungsvorrichtung zeitlich veränderliche Abfolgen von Linien bzw. Mustern in den Arbeitsraum projiziert. Somit kann zu einem Zeitpunkt einer späteren Abfolge ein Sicherheitsbereich erzeugt und überwacht werden, der sich an einem anderen Ort befindet oder eine unterschiedliche Ausdehnung aufweist.

Es kann vorgesehen sein, dass die Beleuchtungsvorrichtung eingerichtet ist, unterschiedliche Projektionszustände einer Abfolge von Linien bzw. Mustern in den Arbeitsraum mit einer Frequenz von mindestens 10 Hz, vorzugsweise mindestens 50 Hz, beispielsweise mindestens 200 Hz, zu projizieren. Durch eine schnelle Projektion unterschiedlicher Projektionszustände kann eine Dauer einer Abfolge besonders kurz gehalten werden, so dass die Einrichtung rasch auf Verletzungen des Sicherheitsbereichs reagieren kann. Darüber hinaus kann das projizierte Licht in diesem Fall besonders zuverlässig extrahiert werden, da Störeinflüsse in der Regel über längere Zeitskalen hinweg auftreten, was sich insbesondere bei der oben beschriebenen Bildung von Differenzbildern vorteilhaft auswirken kann. Die Aufnahmevorrichtung ist hierbei eingerichtet, in ebenso schneller Abfolge Abbilder aufzunehmen. Typischerweise sind die Beleuchtungsvorrichtung und die Aufnahmevorrichtung zeitlich miteinander synchronisiert, so dass ein Abbild durch die Aufnahmevorrichtung aufgenommen wird, während die Beleuchtungsvorrichtung Linien bzw. Muster gemäß einem gewünschten Projektionszustand projiziert. Für die Synchronisierung der Beleuchtungsvorrichtung und der Aufnahmevorrichtung kann die Steuereinheit beispielsweise einen Taktgeber aufweisen.

Die Aufnahmevorrichtung umfasst in den meisten Ausführungen eine Kamera, beispielsweise eine CCD-Kamera oder ein CMOS-Kamera.

In typischen Ausführungen ist die Beleuchtungsvorrichtung eingerichtet, Linien bzw. Muster in den Arbeitsraum zu projizieren, die einen Sicherheitsbereich mit einer Grundfläche von zumindest 1 m² definieren. Die Aufnahmevorrichtung ist in der Regel eingerichtet, Abbilder in einem mindestens entsprechend großen Überwachungsbereich aufzunehmen. Ein derartiger Sicherheitsbereich ist dafür geeignet, eine gefahrlose Mensch-Roboter-Kooperation in dem Arbeitsraum zu ermöglichen. Insbesondere im Bereich der Großrobotik kann es aber auch vorgesehen sein, dass die Beleuchtungsvorrichtung eingerichtet ist, Linien bzw. Muster in den Arbeitsraum zu projizieren, die einen Sicherheitsbereich mit einer Grundfläche von zumindest 5 m², beispielsweise 5 - 25 m², definieren.

Die erwartete Abfolge enthält in der Regel eine Information über eine zu erwartende Abfolge von Abbildern, die im Falle einer räumlichen Modulation der projizierten Muster bzw. Linien auch eine Information über die zu erwartende räumliche Verteilung der Abbilder enthält. Normalerweise entspricht die zu erwartende Abfolge von Abbildern einer Situation, in der keine Verletzung des Sicherheitsbereichs vorliegt oder lediglich eine kontrollierte oder zu erwartende Verletzung eintritt. Die erwartete Abfolge umfasst beispielsweise für relevante Pixel eines aufgenommen Abbildes einen innerhalb der Abfolge erwarteten Farb- und/oder Intensitätsverlauf. Es kann für eine vereinfachte und schnellere Auswertung vorgesehen sein, dass bei der Auswertung lediglich relevante Pixel berücksichtigt werden, die einer Untermenge von insgesamt aufgenommenen Pixeln der Abbilder entspricht, wenn die erwartete Abfolge nur bei diesen Pixeln relevante Information hinsichtlich der Verletzung des Sicherheitsbereichs erwarten lässt.

Bei einer Installation der Einrichtung in dem Arbeitsraum können zunächst die Aufnahmevorrichtung und die Beleuchtungsvorrichtung relativ zueinander und in Bezug auf den gewünschten Sicherheitsbereich ausgerichtet werden. Anschließend können die Aufnahmevorrichtung und die Beleuchtungsvorrichtung eingemessen werden. Die erwartete Abfolge, d.h. eine Referenzabfolge von Sollabbildern, kann in bevorzugten Ausführungen rein virtuell erzeugt werden, ohne dass eine Aufnahme eines unverletzten Sicherheitsbereiches vor bzw. während der Inbetriebnahme unbedingt erforderlich ist. Die Auswertevorrichtung umfasst typischerweise einen Rechner, der mit Programmen ausgestattet ist, die die oben oder unten beschriebenen Verfahrensschritte durchführen.

Die oben oder unten mit Bezug zu der Einrichtung zum Erzeugen und Überwachen eines Sicherheitsbereichs beschriebenen Merkmale lassen sich auf das Verfahren zum Erzeugen und Überwachen des Sicherheitsbereichs übertragen und umgekehrt.

Ausführungsbeispiele werden nachfolgend anhand der Abbildungen beschrieben. Es zeigen
- Fig. 1: eine schematische Ansicht einer Einrichtung zum Erzeugen und Überwachen eines Sicherheitsbereichs in einem Arbeitsraum,
- Fig. 2: eine von einem Projektor projizierte Abfolge von Projektionszuständen,
- Fign. 3 bis 7: weitere von dem Projektor projizierte Abfolgen von Projektionszuständen und
- Fign. 8(a) und (b): eine weitere von einer Beleuchtungsvorrichtung projizierte Abfolge von Projektionszuständen.

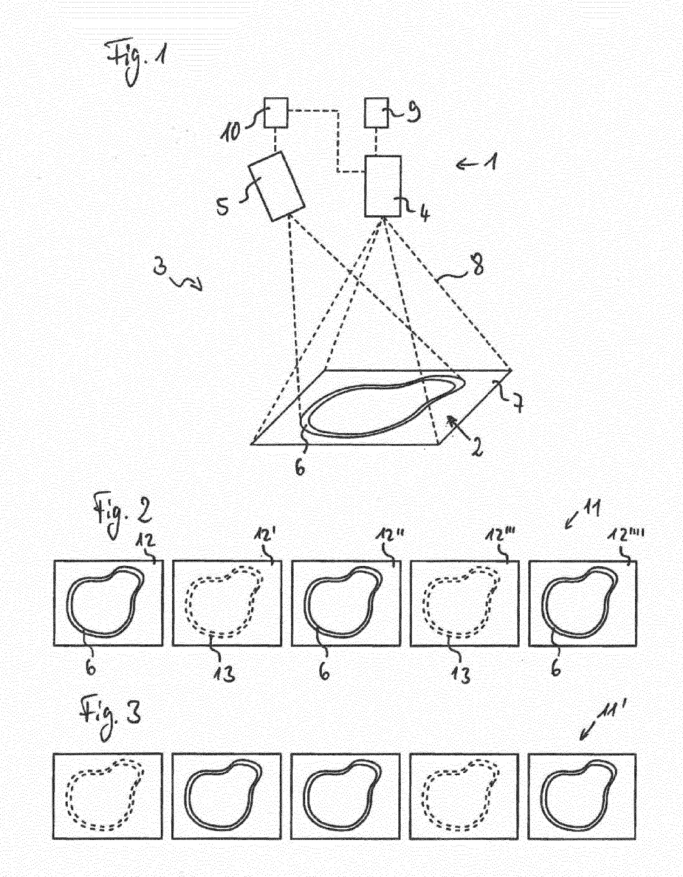

Fig. 1 zeigt eine schematische Ansicht einer Einrichtung 1 zum Erzeugen und Überwachen eines Sicherheitsbereichs 2 in einem Arbeitsraum 3. Die Einrichtung 1 umfasst eine beispielsweise als CMOS-Kamera ausgeführte Aufnahmevorrichtung 4 und eine beispielsweise als Projektor oder in anderen Ausführungen beispielsweise als LED-Matrix bzw. LED-Array ausgeführte Beleuchtungsvorrichtung 5. Der Projektor 5 projiziert in dem dargestellten Beispiel eine zeitlich und gegebenenfalls räumlich codierte Abfolge von Markierungen, die in Form einer Linie 6 dargestellt ist, auf einen Boden 7 des Arbeitsraums 3. Die dargestellte Linie 6 entspricht einem möglichen Projektionszustand, wobei beispielsweise sich mit einer Frequenz von 200 Hz ändernde Projektionszustände durch den Projektor 5 projiziert werden können. Anstelle von Linien können auch beispielsweise Punkte oder andere Muster in den Arbeitsraum 3 projiziert werden. Die Aufnahmevorrichtung 4 nimmt Abbilder dieser Abfolge in einem Überwachungsbereich 8 auf.

Die Einrichtung 1 weist außerdem eine mit der Aufnahmevorrichtung 4 verbundene Auswertevorrichtung 9 auf, die beispielsweise ein Computer und eingerichtet sein kann, die von der Aufnahmevorrichtung 4 aufgenommenen Abbilder der Abfolge von Linien 6 hinsichtlich einer Verletzung des Sicherheitsbereichs 2 auszuwerten. Zu diesem Zweck kann die Auswertevorrichtung 9 ein Bildverarbeitungsprogramm umfassen, das auf Algorithmen für die Auswertung von als Pixelmaps vorliegenden Kameradaten basiert. Zusätzlich ist eine Steuereinheit 10 vorgesehen, die mit dem Projektor 5 und der Aufnahmevorrichtung 4 verbunden und eingerichtet ist, die Aufnahmen durch die Aufnahmevorrichtung 4 mit einzelnen Projektionszuständen der von dem Projektor 5 projizierten Abfolge von Linien 6 zu synchronisieren. Die Steuereinheit 10 und die Auswertevorrichtung 9 können in einigen Ausführungen separat oder als einzelner Computer ausgeführt sein.

Die in Fig. 1 und in weiteren Abbildungen dargestellte Linie 6 ist eine einzelne durchgehende Begrenzungslinie, die die Grenze des Sicherheitsbereichs 2 definiert. Eine Grundfläche des Sicherheitsbereichs 2 kann beispielsweise 1 - 25 m², beispielsweise 3 oder 20 m² betragen. Die zwei in Fig. 1 dargestellten, durchgehenden Linien sollen die Ränder dieser einzelnen homogen ausgeleuchteten Linie 6 darstellen.

Figur 2 zeigt eine Abfolge 11 von Projektionszuständen 12, 12', 12", 12‴, 12"", die von links nach rechts dargestellt zeitlich aufeinanderfolgend von dem Projektor 5 in den Arbeitsraum 3 projiziert werden. Wiederkehrende Merkmale sind in dieser und in den nachfolgenden Abbildungen mit den gleichen Bezugszeichen versehen. Die Projektionszustände 12, 12', 12", 12‴, 12ʺʺ entsprechen den Abbildern, die von der Aufnahmevorrichtung 4 aufgenommen werden. Während in den Projektionszuständen mit den Bezugszeichen 12, 12" und 12ʺʺ die Linie 6 projiziert wird, weisen die zeitlich dazwischenliegenden Projektionszustände 12', 12‴ keine projizierten Linie auf, was durch die gestrichelten Linien mit Bezugszeichen 13 angedeutet ist. Die Projektionszustände 12, 12', 12", 12‴, 12ʺʺ bilden somit die Abfolge 11, die von dem Projektor 5 wiederholt in den Arbeitsraum 3 projiziert wird. Diese Abfolge 11 entspricht der Abfolge von Zuständen An/aus/an/aus/an. Zur Auswertung, ob eine Verletzung des Sicherheitsbereichs 2 vorliegt, wertet die Auswerteeinheit 9 sämtliche fünf Abbilder der Abfolge 11 aus, indem die aufgenommene Abfolge von Abbildern mit einer erwarteten Abfolge von Abbildern verglichen wird. Die erwartete Abfolge von Abbildern wird durch ein Computerprogramm berechnet und enthält eine zeitliche Abfolge an Pixeln der Abbilder erwarteten Helligkeits- und/oder Farbwerten, die einer Situation eines nicht verletzten Sicherheitsbereichs 2 entsprechen. Zur Auswertung der Abfolge von Abbildern kann es vorgesehen sein, dass die Auswerteeinheit 9 Differenzbilder aus den Abbildern bildet und auswertet.

Bei einer Verletzung des Sicherheitsbereichs 2, beispielsweise dadurch, dass ein Mensch, eine Maschine, z.B. ein Industrieroboter, oder ein anderes Objekt in den Sicherheitsbereich 2 eindringt, werden Projektionsstrahlen unterbrochen, so dass die Linie 6 zumindest teilweise überdeckt wird. In dem Abbild weist die Linie in diesem Fall beispielsweise eine Unterbrechung oder einen veränderten Verlauf auf. Somit entspricht die von der Aufnahmevorrichtung 4 aufgenommene Abfolge von Abbildern nicht mehr der erwarteten Abfolge. Wenn eine solche Abweichung detektiert wird, gibt die Auswertevorrichtung 9 ein Verletzungssignal aus, das beispielsweise zu einem Nothalt von beweglichen Maschinen im Bereich des Sicherheitsbereichs 2 führen kann, sodass Kollisionen im Arbeitsraum 3 vermieden werden können.

Es kann vorgesehen sein, dass die Steuereinheit 10 den Sicherheitsbereich 2 zu einem späteren Zeitpunkt an veränderte Arbeitssituationen anpasst. Beispielsweise kann die Steuereinheit 10 hierfür den Projektor 5 so ansteuern, dass dieser ab dem späteren Zeitpunkt Abfolgen projiziert, die eine Begrenzungslinie mit einer unterschiedlichen Form, Position und/oder Größe definieren. In diesem Fall können neue erwartete Abfolgen von Abbildern errechnet und bei der Auswertung hinsichtlich der Verletzung des Sicherheitsbereichs 2 herangezogen werden.

Eine weitere Abfolge 11' von Projektionszuständen ist in Fig. 3 dargestellt. Diese Abfolge entspricht der Abfolge von Zuständen Aus/an/an/aus/an, die als Code interpretiert werden kann. Hierbei handelt es sich somit um eine unregelmäßige Abfolge von Projektionszuständen. Wie oben beschrieben ist, wertet die Auswertevorrichtung 9 Abbilder der gesamten Abfolge 11' aus, um eine Verletzung bzw. Nichtverletzung des Sicherheitsbereichs 2 zu einem bestimmten Zeitpunkt festzustellen. Hierbei werden wie oben jene Bildpunkte im Kamerabild, welche den Sicherheitsbereich 2 abbilden, den oben beschriebenen Code (z.B. "0 110 1") extrahieren. In den übrigen Bildbereichen des Kamerabildes ergeben sich hingegen in der Regel keine Änderungen, so dass die entsprechenden Bildpunkte den Code "0 0 0 0 0" extrahieren. Die Abbilder müssen hierbei zur Feststellung einer Nichtverletzung des Sicherheitsbereichs 2 nicht nur für jede Pixelposition die Detektion des erwarteten Abbildes aufweisen, sondern darüber hinaus auch die genaue Abfolge beinhalten.

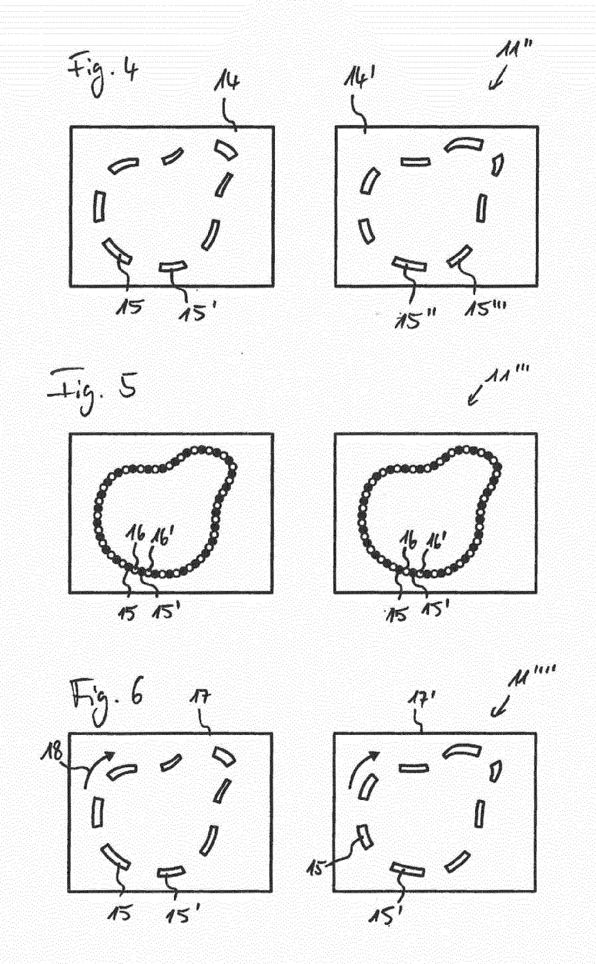

Figur 4 zeigt eine beispielhafte Ausführung, bei der die Abfolge nicht nur zeitlich, sondern auch räumlich moduliert ist. In dem dargestellten Beispiel weist die Abfolge 11" lediglich zwei Projektionszustände 14, 14' auf. Die Projektionszustände 14, 14' umfassen jeweils projizierte Abschnitte der Begrenzungslinie des Sicherheitsbereichs 2, wobei zwei Abschnitte für jeden der beiden Projektionszustände 14, 14' beispielhaft mit den Bezugszeichen 15 und 15' bzw. 15" und 15‴ gekennzeichnet sind. Die Abschnitte 15, 15' bzw. 15", 15‴ sind durch unbeleuchtete Abschnitte der Begrenzungslinie voneinander getrennt. Die Abschnitte der Begrenzungslinie, die in dem ersten Projektionszustand 14 nicht projiziert werden, werden in dem darauffolgenden Projektionszustand 14' projiziert. Anstatt unbeleuchteten Abschnitten können jedoch auch Abschnitte mit einer Projektion einer anderen Farbe oder Intensität vorgesehen sein. Aufgrund der Projektion der Abschnitte kann eine Detektionsleistung der Einrichtung 1 verbessert werden, da Objekte bei einer Unterbrechung der Begrenzungslinie des Sicherheitsbereichs 2 auch eine Verschiebung eines oder mehrerer Abschnitte 15, 15' bzw. 15", 15‴ nach sich ziehen. Diese Abschnitte 15, 15' bzw. 15", 15‴ werden somit an einer veränderten Bildposition im Kamerabild wahrgenommen, als sie erwartet werden. Ein zugehöriges Soll-Abbild kann neben der Bildposition, an der der Sicherheitsbereich 2 erwartet wird, auch den zu erwartenden Abschnitt als Code an dieser Stelle definieren. Es ist in einigen Ausführungen auch möglich, dass die Abschnitte 15, 15' bzw. 15", 15‴ nicht abwechselnd ausgeleuchtet werden. Stattdessen kann es vorgesehen sein, dass für jeden Abschnitt ein eindeutiger Code projiziert wird, welcher wiederum an der erwarteten Bildposition extrahiert werden muss. Die Abbilder und die erwarteten Abbilder beinhalten in diesem Fall für die einzelnen Abschnitte unterschiedliche Codes.

Figur 5 zeigt eine Abfolge 11‴, die der Abfolge 11" entspricht, wobei die Abschnitte 15, 15' jedoch kleiner und punktförmig ausgebildet sind. Hierbei sollen die ausgefüllten Kreise beleuchtete punktförmige Abschnitte 15, 15' darstellen, wobei nicht ausgefüllte Kreise nicht beleuchtete (oder mit unterschiedliche Farbe und/oder Intensität beleuchtete) Abschnitte 16, 16' darstellen sollen. Die punktförmigen Abschnitte können beispielsweise einen vergleichsweise geringen Durchmesser von 2 cm aufweisen.

Eine weitere Abfolge 11"" ist in Fig. 6 schematisch dargestellt. Hierbei sind nur beispielhaft zwei unterschiedliche Projektionszustände 17, 17' gezeigt, wobei die Abfolge 11"" weitere, nicht dargestellte Projektionszustände aufweist. In dieser Ausführung werden wie oben beschrieben Abschnitte 15, 15' projiziert. Diese projizierten Abschnitte 15, 15' umlaufen in mehreren aufeinanderfolgenden Projektionszuständen der Abfolge 11"" die Begrenzungslinie des Sicherheitsbereiches 2 beispielsweise im Uhrzeigersinn, wie durch den Pfeil mit dem Bezugszeichen 18 angedeutet ist. Innerhalb der Abfolge 11ʺʺ ist es in der Regel vorgesehen, dass die Begrenzungslinie vollständig ausgeleuchtet wird. In diesem Sinne kann der Projektionszustand 17 den ersten Projektionszustand der Abfolge und der Projektionszustand 17' den letzten Projektionszustand der Abfolge bilden.

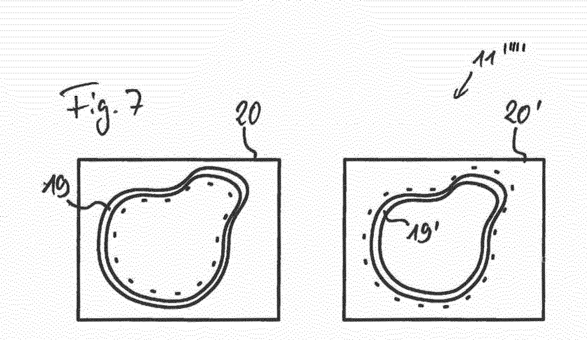

Figur 7 zeigt schematisch eine weitere Abfolge 11‴ʺ. Diese kann beispielsweise lediglich zwei unterschiedliche Projektionszustände aufweisen. Hierbei werden wie oben beschrieben unterschiedlichen Abschnitte 19, 19' der Begrenzungslinie des Sicherheitsbereichs 2 in aufeinanderfolgenden Projektionszuständen 20, 20' ausgeleuchtet. Die Abschnitte 19, 19' umlaufen jeweils die Begrenzungslinie des Sicherheitsbereichs 2 vollständig und sind ineinander geschachtelt. In dem ersten Projektionszustand 20 wird der erste Abschnitt 19 ausgeleuchtet, während die Lage des zweiten Abschnitts 19' lediglich durch eine gestrichelte Linie angedeutet ist. In dem zweiten Projektionszustand 20' wird hingegen der zweite Abschnitt 19' ausgeleuchtet, während die Lage des ersten Abschnitts 19 lediglich durch eine gestrichelte Linie angedeutet ist.

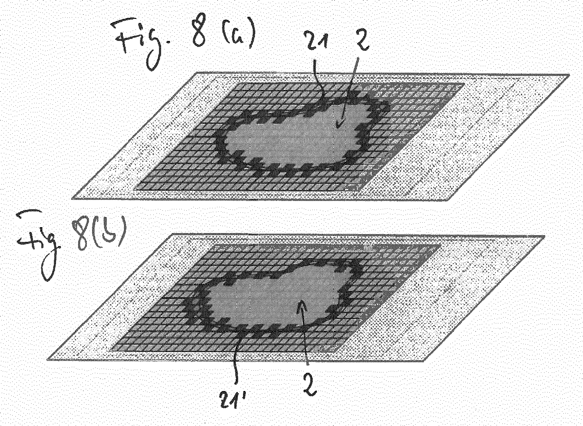

Wie in Fign. 8(a) und (b) gezeigt ist, können auch Rechtecke als strukturierende Elemente eines Musters verwendet werden. Zum Beispiel kann eine Art Schachbrettmuster verwendet werden, wobei direkt benachbarte Felder jeweils zu verschiedenen Zeitpunkten projiziert werden. Im Gegensatz zu unstrukturierten Punkten, die sich je nach Form und Lage der Linie entsprechend ändern, wäre bei den Feldern des Schachbrettes eine feste räumliche Beziehung gegeben. Somit kann die Positionen aller Felder des Schachbrettmusters vorberechnet werden und während der Generierung des Sicherheitsbereiches (2) können genau die Felder ausgewählt werden, welche an der Position des zu projizierenden Sicherheitsbereiches (2) bzw. an seiner Begrenzung liegen. In dem gezeigten Beispiel bestehen die Abschnitte aus rechteckigen Feldern. Die Positionen der Felder können vorberechnet werden und haben einen festen Bezug zur Welt. Die Felder, welche schließlich zur Repräsentation des aktuellen Sicherheitsbereiches (2) genutzt werden, können individuell aktiviert bzw. deaktiviert werden. Direkt benachbarte Felder werden typischerweise jeweils im anderen Projektionszustand dargestellt. Somit hat man, wie beispielsweise oben mit Bezug zu Fig. 5 beschrieben ist, abwechselnde benachbarte Abschnitte, die bei einer Verletzung des Sicherheitsbereiches z.B. durch eine menschliche Hand verdeckt werden. Die in den Fign. 8(a) und (b) gezeigten Projektionszustände gehören zu einer Abfolge. Die ausgefüllt dargestellten Felder, von denen zwei beispielhaft mit den Bezugszeichen 21 und 21' versehen sind, werden dabei projiziert. Insgesamt ergibt die Menge aller Felder die geschlossene Begrenzungslinie des Sicherheitsbereiches (2).

Die Ausführungen der verschiedenen Abbildungen sind miteinander kombinierbar, sodass beispielsweise ineinander geschachtelte Abschnitte wiederum entlang der Begrenzungslinie in verschiedene Abschnitte unterteilt sein können. Es kann beispielsweise auch vorgesehen sein, dass diese Abschnitte die Begrenzungslinie innerhalb der Abfolge umlaufen. Im Allgemeinen können die Abschnitte regelmäßig oder unregelmäßig angeordnet sein und/oder gleichmäßige oder unterschiedlichen Formen oder Größen aufweisen.

Lediglich in den Ausführungsbeispielen offenbarte Merkmale der verschiedenen Ausführungsformen können miteinander kombiniert und einzeln beansprucht werden.

## Patentansprüche

1. Einrichtung (1) zum Erzeugen und Überwachen eines Sicherheitsbereiches (2) in einem Arbeitsraum (3), umfassend
eine Aufnahmevorrichtung (4), die eingerichtet ist, Abbilder in einem den Sicherheitsbereich (2) umfassenden Überwachungsbereich (8) aufzunehmen,
eine Beleuchtungsvorrichtung (5), die eingerichtet ist, den Sicherheitsbereich (2) definierende Linien (6) oder Muster in den Arbeitsraum (3) zu projizieren, und
eine Auswertevorrichtung (9), die eingerichtet ist, die von der Aufnahmevorrichtung (4) aufgenommenen Abbilder hinsichtlich einer Verletzung des Sicherheitsbereiches (2) auszuwerten,
**dadurch gekennzeichnet, dass** die Beleuchtungsvorrichtung (5) eingerichtet ist, eine zeitlich codierte Abfolge (11, 11', 11", 11‴, 11ʺʺ, 11‴ʺ) der Linien (6) bzw. Muster in den Arbeitsraum (3) zu projizieren, wobei die Auswertevorrichtung (9) eingerichtet ist, Abbilder der zeitlich codierten Abfolge (11, 11', 11", 11‴, 11"", 11‴ʺ) der Linien (6) bzw. Muster mit einer zu erwartenden Abfolge zu vergleichen und ein Verletzungssignal auszugeben, wenn die Abbilder der zeitlich codierten Abfolge (11, 11', 11", 11‴, 11"", 11‴ʺ) nicht mit der zu erwartenden Abfolge übereinstimmen.

2. Einrichtung (1) nach Anspruch 1, **dadurch gekennzeichnet, dass** die zeitlich codierte Abfolge (11, 11', 11ʺʺ) projizierter Linien (6) und Muster zumindest drei aufeinanderfolgende Projektionszustände umfasst, sodass zur Bestimmung der Verletzung des Sicherheitsbereiches (2) zumindest drei Abbilder ausgewertet werden.

3. Einrichtung (1) nach einem der Ansprüche 1 oder 2, **dadurch gekennzeichnet, dass** die zeitlich codierte Abfolge (11, 11', 11", 11‴, 11ʺ‴) aus zwei unterschiedlichen Projektionszuständen besteht.

4. Einrichtung (1) nach einem der Ansprüche 1 bis 3, **dadurch gekennzeichnet, dass** die zeitlich codierte Abfolge (11", 11‴, 11ʺʺ, 11ʺ‴) der projizierten Linien (6) bzw. Muster auch eine räumliche Modulation der projizierten Linien (6) bzw. Muster umfasst.

5. Einrichtung (1) nach Anspruch 4, **dadurch gekennzeichnet, dass** die zeitlich codierte Abfolge (11", 11‴, 11"", 11ʺ‴) der projizierten Linien (6) bzw. Muster eine aufeinanderfolgende Ausleuchtung unterschiedlicher Abschnitte (15, 15', 15", 15‴) einer Begrenzungslinie des Sicherheitsbereiches (2) umfasst.

6. Einrichtung (1) nach Anspruch 5, **dadurch gekennzeichnet, dass** die zeitlich codierte Abfolge (11", 11‴, 11‴ʺ) der projizierten Linien (6) bzw. Muster eine abwechselnde Ausleuchtung unterschiedlicher Abschnitte (15, 15', 15", 15‴) der Begrenzungslinie umfasst.

7. Einrichtung (1) nach einem der Anspruch 6, **dadurch gekennzeichnet, dass** die zeitlich codierte Abfolge (11", 11‴) der projizierten Linien (6) bzw. Muster aus Projektionszuständen besteht, die einer unterbrochenen Begrenzungslinie entsprechen.

8. Einrichtung (1) nach einem der Ansprüche 5 bis 7, **dadurch gekennzeichnet, dass** die Begrenzungslinie des Sicherheitsbereiches (2) eine geschlossene Linie bildet, wobei die Abfolge (11", 11‴, 11"", 11‴ʺ) der projizierten Linien (6) bzw. Muster eine abschnittsweise aufeinanderfolgende Beleuchtung der gesamten Begrenzungslinie umfasst.

9. Einrichtung (1) nach einem der Ansprüche 1 bis 8, **dadurch gekennzeichnet, dass** die Auswertevorrichtung (9) eingerichtet ist, Differenzbilder aus zumindest zweien der Abbilder der zeitlich codierten Abfolge (11, 11', 11", 11‴, 11‴ʺ) zu bilden, und diese mit der zu erwartenden Abfolge zu vergleichen.

10. Einrichtung (1) nach einem der Ansprüche 1 bis 9, **gekennzeichnet durch** eine mit der Beleuchtungsvorrichtung (5) verbundene Steuereinheit, die eingerichtet ist, die Beleuchtungsvorrichtung (5) zur Anpassung des Sicherheitsbereiches (2) an veränderte Arbeitssituationen derart anzusteuern, dass die Beleuchtungsvorrichtung (5) zeitlich veränderliche Abfolgen (11, 11', 11", 11"', 11‴ʺ) von Linien (6) bzw. Mustern in den Arbeitsraum (3) projiziert.

11. Einrichtung (1) nach einem der Ansprüche 1 bis 10, **dadurch gekennzeichnet, dass** die Beleuchtungsvorrichtung (5) eingerichtet ist, unterschiedliche Projektionszustände einer Abfolge (11, 11', 11", 11‴, 11‴ʺ) von Linien (6) bzw. Mustern in den Arbeitsraum (3) mit einer Frequenz von mindestens 10 Hz, vorzugsweise mindestens 50 Hz, zu projizieren.

12. Einrichtung (1) nach einem der Ansprüche 1 bis 11, **dadurch gekennzeichnet, dass** die Beleuchtungsvorrichtung (5) eingerichtet ist, Linien (6) bzw. Muster in den Arbeitsraum (3) zu projizieren, die einen Sicherheitsbereich (2) mit einer Grundfläche von zumindest 1 m² definieren.

13. Verfahren zum Erzeugen und Überwachen eines Sicherheitsbereiches (2) in einem Arbeitsraum (3), umfassend folgende Schritte:
- Bereitstellen einer Einrichtung (1) nach einem der vorangegangenen Ansprüche,
- Projizieren einer zeitlich codierten Abfolge (11, 11', 11", 11‴, 11ʺ‴) von den Sicherheitsbereich (2) definierenden Linien (6) oder Mustern in den Arbeitsraum (3) durch die Beleuchtungsvorrichtung (5),
- Aufnehmen von Abbildern der zeitlich codierten Abfolge (11, 11', 11", 11‴, 11ʺ‴) der Linien (6) bzw. Muster durch die Aufnahmevorrichtung (4),
- Vergleichen der Abbilder der zeitlich codierten Abfolge (11, 11', 11", 11‴, 11‴ʺ) der Linien (6) oder Muster mit einer zu erwartenden Abfolge durch die Auswertevorrichtung (9) und
- Ausgeben eines Verletzungssignals durch die Auswertevorrichtung (9), wenn die Abbilder der zeitlich codierten Abfolge (11, 11', 11", 11‴, 11‴ʺ) nicht mit der zu erwartenden Abfolge übereinstimmen.

## Claims

1. An appliance (1) for creating and monitoring a safety area (2) in a working space (3), comprising
a recording device (4) which is configured to record images in a monitoring area (8) which encompasses the safety area (2),
an illumination device (5) which is configured to project lines (6) or patterns which define the safety area (2), into the working space (3), and
an evaluation device (9) which is configured to evaluate the images which are recorded by the recording device (4) with respect to a violation of the safety area (2),
**characterised in that** the illumination device (5) is configured to project a temporally coded sequence (11, 11', 11", 11‴, 11ʺʺ, 11‴ʺ) of the lines (6) or patterns into the working space (3), wherein the evaluation device (9) is configured to compare images of the temporally coded sequence (11, 11', 11", 11‴, 11ʺʺ, 11‴ʺ) of the lines (6) or patterns with the expected sequence and to output a violation signal if the images of the temporally coded sequence (11, 11', 11", 11‴, 11ʺʺ, 11ʺ‴) do not correspond to the expected sequence.

2. An appliance (1) according to claim 1, **characterised in that** the temporally coded sequence (11, 11', 11ʺʺ) of projected lines (6) and patterns comprises at least three consecutive projection states, so that at least three images are evaluated for determining the violation of the safety area (2).

3. An appliance (1) according to one of the claims 1 or 2, **characterised in that** the temporally coded sequence (11, 11', 11", 11‴, 11‴ʺ) consists of two different projection states.

4. An appliance (1) according to one of the claims 1 to 3, **characterised in that** the temporally coded sequence (11", 11‴, 11ʺʺ, 11ʺ‴) of the projected lines (6) or patterns also comprises a spatial modulation of the projected lines (6) or patterns.

5. An appliance (1) according to claim 4, **characterised in that** the temporally coded sequence (11", 11‴, 11ʺʺ, 11ʺ‴) of the projected lines (6) or patterns comprises a consecutive illumination of different sections (15, 15', 15", 15‴) of a boundary line of the safety area (2).

6. An appliance (1) according to claim 5, **characterised in that** the temporally coded sequence (11", 11‴, 11ʺ‴) of the projected lines (6) or patterns comprises an alternating illumination of different sections (15, 15', 15", 15‴) of the boundary line.

7. An appliance (1) according to claim 6, **characterised in that** the temporally coded sequence (11", 11‴) of the projected lines (6) or patterns consist of projection states which correspond to an interrupted boundary line.

8. An appliance (1) according to one of the claims 5 to 7, **characterised in that** the boundary line of the safety area (2) forms a closed line, wherein the sequence (11", 11‴, 11ʺʺ, 11ʺ‴) of the projected lines (6) or patterns comprises a sectionwise successive illumination of the complete boundary line.

9. An appliance (1) according to one of the claims 1 to 8, **characterised in that** the evaluation device (9) is configured to form differential images from at least two of the images of the temporally coded sequence (11, 11', 11", 11‴, 11‴ʺ) and to compare these to the expected sequence.

10. An appliance (1) according to one of the claims 1 to 9, **characterised by** a control unit which is connected to the illumination device (5) and which is configured to activate the illumination device (5) for adapting the safety area (2) to changed working situations, in a manner such that the illumination device (5) projects temporally changing sequences (11, 11', 11", 11‴, 11‴ʺ) of lines (6) or patterns into the working space (3).

11. An appliance (1) according to one of the claims 1 to 10, **characterised in that** the illumination device (5) is configured to project different projections states of a sequence (11, 11', 11", 11‴, 11ʺ‴) of lines (6) or patterns into the working space (3) at a frequency of at least 10 Hz, preferably at least 50 Hz.

12. An appliance (1) according to one of the claims 1 to 11, **characterised in that** the illumination device (5) is configured to project lines or patterns, which define a safety area (2) with a base area of at least 1 m², into the working space (3).

13. A method for creating and monitoring a safety area (2) in a working space (3), comprising the following steps:
- providing an appliance (1) according to one of the preceding claims,
- projecting a temporally coded sequence (11, 11', 11", 11‴, 11‴ʺ) of lines (6) or patterns which define the safety area (2), into the working space (3) by way of the illumination device (5),
- recording images of the temporally coded sequence (11, 11', 11", 11‴, 11ʺ‴) of the lines (6) or patterns by way of the recording device (4),
- comparing the images of the temporally coded sequence (11, 11', 11", 11‴, 11‴ʺ) of the lines (6) or patterns with an expected sequence by the evaluation device (9) and
- outputting a violation signal by way of the evaluation device (9) if the images of the temporally coded sequence (11, 11', 11", 11‴, 11‴ʺ) do not correspond to the expected sequence.

## Revendications

1. Dispositif (1) permettant de créer et de surveiller une zone de sécurité (2) dans un espace de travail (3), comprenant
un dispositif de prise de vues (4), qui est conçu pour enregistrer des images dans une zone de surveillance (8) comprenant la zone de sécurité (2),
un dispositif d'éclairage (5) qui est conçu pour projeter des lignes (6) ou des motifs définissant la zone de sécurité (2) dans l'espace de travail (3), et
un dispositif d'évaluation (9), qui est conçu pour interpréter les images enregistrées par le dispositif d'enregistrement (4) en ce qui concerne une violation de la zone de sécurité (2),
**caractérisé en ce que** le dispositif d'éclairage (5) est conçu pour projeter une suite codée (11, 11', 11", 11‴, 11ʺʺ, 11ʺ‴) chronologique de lignes (6), respectivement, de motifs, dans l'espace de travail (3), où le dispositif d'évaluation (9) est conçu pour comparer des images de la suite codée (11, 11', 11", 11‴, 11ʺʺ, n‴ʺ) chronologique de lignes (6), respectivement, de motifs, à une suite espérée et à émettre un signal de violation lorsque les images de la suite codée (11, 11', 11", 11‴, 11ʺʺ, 11ʺ‴) chronologique ne correspondent pas à la suite espérée.

2. Dispositif (1) selon la revendication 1, **caractérisé en ce que** la suite codée (11, 11', 11"") chronologique de lignes (6) et de motifs projetés comprend au moins trois états de projection se succédant de sorte que, pour la détermination de la violation de la zone de sécurité (2), au moins trois images sont interprétées.

3. Dispositif (1) selon l'une des revendications 1 ou 2, **caractérisé en ce que** la suite codée (11, 11', 11", 11‴, 11ʺ‴) chronologique est constituée de deux états de projection différents.

4. Dispositif (1) selon l'une des revendications 1 à 3, **caractérisé en ce que** la suite codée (11", 11‴, 11ʺʺ, 11ʺ‴) chronologique des lignes (6), respectivement, des motifs projetés comprend également une modulation spatiale des lignes (6), respectivement, des motifs projetés.

5. Dispositif (1) selon la revendication 4, **caractérisé en ce que** la suite codée (11", 11‴, 11"", 11ʺ‴) chronologique des lignes (6), respectivement, des motifs projetés comprend des segments (15, 15', 15", 15‴) d'éclairage différent successifs d'une ligne de délimitation de la zone de sécurité (2).

6. Dispositif (1) selon la revendication 5, **caractérisé en ce que** la suite codée (11", 11‴, 11‴ʺ) chronologique des lignes (6), respectivement, des motifs projetés comprend des segments (15, 15', 15", 15"') d'éclairage différent en alternance de la ligne de délimitation.

7. Dispositif (1) selon l'une de la revendication 6, **caractérisé en ce que** la suite codée (11", 11"') chronologique des lignes (6), respectivement, des motifs projetés est constituée d'états de projection qui correspondent à une ligne de délimitation interrompue.

8. Dispositif (1) selon l'une des revendications 5 à 7, **caractérisé en ce que** la ligne de délimitation de la zone de sécurité (2) forme une ligne fermée, où la suite (11", 11‴, 11"", 11ʺ‴) des lignes (6), respectivement, des motifs, comprend un éclairage par segments se succédant de la ligne de délimitation totale.

9. Dispositif (1) selon l'une des revendications 1 à 8, **caractérisé en ce que** le dispositif d'évaluation (9) est conçu pour former des images de différences à base d'au moins deux des images de la suite codée (11, 11', 11", 11‴, 11‴ʺ) chronologique et les comparer avec la suite espérée.

10. Dispositif (1) selon l'une des revendications 1 à 9, **caractérisé par** une unité de commande reliée avec le dispositif d'éclairage (5), qui est conçue pour commander le dispositif d'éclairage (5) pour qu'il adapte la zone de sécurité (2) à des situations de travail variables de telle manière que le dispositif d'éclairage (5) projette des suites variables (11, 11', 11", 11‴, 11‴ʺ) chronologiques de lignes (6), respectivement, de motifs, dans l'espace de travail (3).

11. Dispositif (1) selon l'une des revendications 1 à 10, **caractérisé en ce que** le dispositif d'éclairage (5) est conçu pour projeter des états de projection variables d'une suite (11, 11', 11", 11‴, 11ʺ‴) de lignes (6), respectivement, de motifs, dans l'espace de travail (3) avec une fréquence d'au moins 10 Hz, de préférence, d'au moins 50 Hz.

12. Dispositif (1) selon l'une des revendications 1 à 11, **caractérisé en ce que** le dispositif d'éclairage (5) est conçu pour projeter des lignes, (6) respectivement, des motifs, dans l'espace de travail (3) qui définissent une zone de sécurité (2) avec une surface au sol d'au moins 1 m².

13. Procédé pour créer et surveiller une zone de sécurité (2) dans un espace de travail (3), comprenant les étapes suivantes :
- la mise au point d'un dispositif (1) selon l'une des revendications précédentes,
- la projection d'une suite codée (11, 11', 11", 11‴, 11ʺ‴) chronologique de lignes (6) ou de motifs définissant la zone de sécurité (2) dans l'espace de travail (3) par le dispositif d'éclairage (5),
- l'enregistrement d'images de la suite codée (11, 11', 11", 11‴, 11ʺ‴) chronologique des lignes (6), respectivement, des motifs, par le dispositif de prise de vues (4),
- la comparaison des images de la suite codée (11, 11', 11", 11‴, 11ʺ‴) chronologique des lignes (6) ou des motifs avec une suite espérée par le dispositif d'évaluation (9), et
- l'émission d'un signal de violation par le dispositif d'évaluation (9) lorsque les images de la suite codée (11, 11', 11", 11‴, 11ʺ‴) chronologique ne correspondent pas à une suite espérée.
